# EUROPÄISCHE PATENTANMELDUNG

(11) **EP 2 042 298 A2**
(43) Veröffentlichungstag der Anmeldung: **01.04.2009**
(21) Anmeldenummer: 08165197.8
(22) Anmeldetag: 26.09.2008
(51) Int. Cl.: B32B 11/04, F16L 59/02

(54) **Dehnbare Folie mit Klebstoffbelag**

(30) Priorität: 28.09.2007 DE 10700792
(71) Anmelder: Keller GmbH, 51381 Leverkusen (DE)
(72) Erfinder: Bischoff, Achim, 42799, Leichlingen (DE)
(74) Vertreter: Gille Hrabal Struck Neidlein Prop Roos

(57) **Zusammenfassung**

Die Erfindung betrifft ein Verfahren sowie eine mit Klebstoff beschichtete Folie zur Dämmung, Isolierung oder Abdichtung von Gebäudeteilen und Gebäudeeinrichtungen.

Aufgabe der Erfindung ist es, Gebäudeteile oder Geböudeeinrichtungen einfacher und beständiger isolieren, dämmen oder abdichten zu können.

Zur Lösung der Aufgabe wird eine mit Klebstoff beschichtete Streckfolie für die Isolierung, Dämmung oder Abdichten bei einem Gebäude verwendet und dabei zumindest teilweise gedehnt. Die Folie kann wenigstens um wenigstens 100%, besonders bevorzugt um wenigstens 200% in wenigstens eine Richtung, vorzugsweise in beide Raumrichtungen plastisch gedehnt werden, ohne zu zerreißen. Es ist also möglich, die Folie mit dem Klebstoff so zu dehnen, dass dieser Verbund anschließend im Fall der 100% plastischen Dehnbarkeit doppelt so lang ist und in diesem gedehnten Zustand verbleibt.

## Beschreibung

Die Erfindung betrifft ein Verfahren sowie eine mit Klebstoff beschichtete Folie zur Dämmung, Isolierung oder Abdichtung von Gebäudeteilen und Gebäudeeinrichtungen. Bei Gebäuden besteht regelmäßig Bedarf für eine zuverlässige Dämmung, Isolierung oder Abdichtung. Wasserleitungsrohre erzeugen Körperschall, wenn Wasser durch die Rohre fließt. Um damit verbundene Geräusche zu mindern, werden Wasserleitungsrohre gedämmt. Fließt heißes Wasser durch die Rohre, so werden die Rohre zusätzlich regelmäßig isoliert, um unerwünschte Wärmeverluste zu vermeiden. Wird ein Wasserleitungsrohr durch eine Wand hindurch aus einem Gebäude herausgeführt, so besteht Bedarf, den Übergang zwischen Wand und Rohr gegen den Eintritt von Feuchtigkeit abzudichten.

Geradlinige Flächen zu isolieren, abzudichten und/ oder zu dämmen, ist unproblematisch möglich. Probleme ergeben sich, wenn verwinkelte Geometrien isoliert, abgedichtet oder gedämmt werden sollen.

Aus der Druckschrift DE 8603674 U1 geht ein Dichtdämmstreifen hervor, der einen länglichen Streifen eines Dämmmaterials mit einer daran befestigten wasserdichten Folie umfasst. Die Folie schrumpft unter Einfluss von Wärme. Zur Verstärkung ist in die Folie eine netzartige Struktur integriert. Diese Folie wird zur Isolierung von Rohrleitungen eingesetzt. Zwar kann ein Rohr mit einem solchen Streifen leicht umwickelt werden, um beispielsweise eine Körperschallisolierung zu bewirken. Relativ aufwendig bleibt allerdings die Anbringung der Isolierung bei Rohrverzweigungen, da hier relativ komplizierte Geometrien zu isolieren sind.

Zur Isolierung oder Dämmung von Rohren werden rohrförmig geformte Umhüllungen eingesetzt. Eine solche als Dämmmaterial für Rohrleitungen dienende Umhüllung wird zum Beispiel in der Druckschrift DE 100 40 346 A1 beschrieben. Mit solchen Umhüllungen ist es schwierig, Abzweigungen zu dämmen. Außerdem beanspruchen solche Umhüllungen nachteilhaft ein relativ großes Volumen, was zu relativ hohen Transport- und Lagerkosten führt.

Um die Handhabung zu erleichtern, wird gemäß der DE 203 12 090 U1 vorgeschlagen, ein Dämmmaterial für Rohrleitungen wellenförmig auszugestalten. Die Herstellung von wellenförmigen Material ist aufwendig. Wellenförmiges Material ist relativ voluminös, was sich nachteilhaft auf Transport- und Lagerkosten auswirkt.

Aus dem Stand der Technik sind sogenannte Streckfolien bzw. Dehnfolien bekannt, die für das Verpacken oder Zusammenbinden von Gegenständen eingesetzt werden. Es handelt sich um dehnbare Folien, die gedehnt werden können, ohne zu zerreißen. Die Druckschrift EP 0 595 843 B1 offenbart ein Haftklebband für das Zusammenbinden von Gegenständen, die eine Streckfolie umfasst, die sich plastisch verhält. Aus dieser Druckschrift ist auch bekannt, das Haftklebeband als Dichtmittel bei Gewindeverbindungen einzusetzen. Der hieraus bekannte Stand der Technik ist allerdings relativ ungeeignet, um großflächig bei Gebäuden als Dicht-, Dämm- oder Isoliermittel unter Ausnutzung der Dehnbarkeit eingesetzt werden zu können. Es fehlt einerseits an Schall oder Wärme dämmenden Eigenschaften. Auch sind die in dieser Druckschrift vorgeschlagenen Haftkleber ungeeignet, um das Band zuverlässig mit beispielsweise einem Mauerwerk verbinden zu können.

Aus der Druckschrift DE 10 2004 034 601 A1 ist bekannt, eine dehnfähige, elastische, bandartige, anklebbare Folie mit einer in Abschnitte unterteilte, nicht dehnfähige Lage zu versehen, um dieses als Verbindungselement bei Gebäuden einzusetzen. Die einzelnen 2 bis 5 mm dicken Abschnitte können aus Butyl-Kautschuk bestehen und dienen als dauerhaft klebrige Masse. Nachteilhaft handelt es sich bei der dehnfähigen Folie um eine elastische Folie, die also im Anschluss an die Dehnung relativ starke Rückstellkräfte entwickelt. Eine klebrige Masse aufzubringen, die sich nicht zusammen mit der Folie dehnt, ist fertigungstechnisch relativ aufwändig. Auch ist der Transport und die Lagerung nicht unproblematisch, da die Abschnitte bis zur Anwendung erhalten bleiben sollen.

Aus der Druckschrift DE 29 22 242 C2 geht eine dehnbare Maschenware hervor. Dichtigkeitsprobleme können mit der aus der Druckschrift DE 29 22 242 C2 bekannten Maschenware nicht zuverlässig vermieden werden. Hieraus ist keine Folie bekannt, die um wenigstens 100 % im Sinne der vorliegenden Erfindung gedehnt werden kann.

Die Druckschriften DE 100 45 002 A1 und DE 87 09 51 7 U1 offenbaren jeweils eine verformbare Bitumenbahn, die mit weiteren Schichten wie Schaumstoffbahn, Streckgitter oder Gestrick versehen ist. Eine dehnbare Folie zu verwenden, ist gemäß der DE 1 00 45 002 A1 nicht vorgesehen.

Aus der Druckschrift EP 0 595 843 B1 ist bekannt, mit Hilfe eines dehnbaren, selbstklebenden Bandes einen gestapelte Produkte zu stabilisieren. Dieser Druckschrift ist keine Lehre zu entnehmen, auf welche Weise Gebäudeteile oder Gebäudeeinrichtungen isoliert, gedämmt oder abgedichtet werden können.

Aufgabe der Erfindung ist es, Gebäudeteile einfacher isolieren, dämmen oder abdichten zu können.

Die Aufgabe der Erfindung wird durch ein Verfahren mit den Merkmalen des ersten Anspruchs sowie mit einer Folie mit den Merkmalen des Nebenanspruchs gelöst. Vorteilhafte Ausgestaltungen ergeben sich aus den Unteransprüchen.

Zur Lösung der Aufgabe wird eine mit Klebstoff beschichtete Streckfolie für die Isolierung, Dämmung oder Abdichten bei einem Gebäude verwendet und dabei zumindest teilweise gedehnt. Die Folie mit dem Klebstoff kann wenigstens um wenigstens 100%, bevorzugt um 200%, ganz besonders bevorzugt um wenigstens 300% in wenigstens eine Richtung, vorzugsweise in beide Raumrichtungen plastisch gedehnt werden, ohne zu zerreißen. Es ist also möglich, die Folie mit dem aufgebrachten Klebstoff so zu dehnen, dass diese anschließend im Fall der 100% plastischen Dehnbarkeit doppelt so lang ist und in diesem gedehnten Zustand verbleibt. Als Streckfolie wird beispielsweise die aus der Druckschrift EP 0 595 843 B1 bekannte Folie eingesetzt. Zwar ist aus dieser Druckschrift bereits bekannt, die Folie als Dichtung bei einem Schraubgewinde einzusetzen. Dabei spielt allerdings die Dehnbarkeit der Folie keine Rolle. Es ist auch nicht vorgesehen, die Folie in einem Gewinde zu dehnen. Im Unterschied dazu wird gemäß dem vorliegenden Verfahren die Folie mit dem aufgebrachten Klebstoff plastisch gedehnt. Dadurch können komplexe Geometrien sehr viel leichter isoliert, gedämmt und/ oder abgedichtet werden.

Im Unterschied zu der aus der Druckschrift DE 10 2004 034 601 A1 bekannten Folie kann die anspruchsgemäße Folie mit dem aufgebrachten Klebstoff plastisch stark gedehnt werden. Rückstellkräfte werden so vermieden. Ein zuverlässiger Halt der Folie nebst Klebstoff auf einem Untergrund wird durch Rückstellkräfte daher nicht gefährdet.

Müssen Ecken oder Kanten isoliert werden, beispielsweise gegenüber Feuchtigkeit, so genügt es, die Folie mit dem Klebstoff einfach in die entsprechende Ecke oder Kante hineinzudrücken. Eine zeitaufwändige Handarbeit mit vielen kleinen Teilen Isoliermaterial, die separat Stück für Stück aufgeklebt werden, kann entfallen.

Ein entscheidender Vorteil der Erfindung besteht daher darin, dass zu isolierende, dämmende oder zu dichtende Stellen in einem Stück abgedeckt werden können. Wird stückchenweise isoliert etc., so ist damit die Gefahr verbunden, dass sich hieraus undichte Stellen ergeben oder aber es muss unverhältnismäßig viel Material eingesetzt werden. Überlappen sich nämlich einzelne Stücke an Isoliermaterial nicht oder nur wenig, so besteht ein hohes Risiko, dass undichte Stellen auftreten. Mit Hilfe von großflächigen Überlappungen kann die Gefahr einer auftretenden undichten Stelle zwar deutlich reduziert werden. Bei vielen einzelnen Stücken Isoliermaterial gibt es dann aber auch viele großflächige Überlappungen, die mit einem entsprechend großen Materialverbrauch einhergehen. Diese Probleme werden erfindungsgemäß vermieden.

Durch die erfindungsgemäßen Folien können beispielsweise T-Stücke von Rohren mit nur einem Stück Folienmaterial vollkommen ummantelt werden. Dies gilt sowohl für T-Stücke, die im rechten Winkel verzweigen, als auch Verzweigungen unter einem Winkel von beispielsweise 45 Grad. In gleicher Weise werden problemlos Ecken oder sonstige vom gradlinigen abweichende Verläufe der Rohre isoliert, ohne dass die Folie an dieser Stelle abgeschnitten werden müsste. Die Flexibilität erhöht sich also dadurch erheblich. Ein Rohr kann entsprechend schneller isoliert werden. Die Anzahl an überlappenden Bereichen werden minimiert, was den Materialverbrauch minimiert.

Beispielsweise ist es bei einem Durchtritt eines Rohres aus einer Mauer heraus regelmäßig erforderlich, den Austritt des Rohres aus einer Mauer flüssigkeitsdicht abzudichten. Erfindungsgemäß wird eine Streckfolie auf und um das Rohr herum und zugleich auf die angrenzende Mauer geklebt. Wird ein nicht dehnbares Band vollständig um das Rohr gewickelt, so kann dieser Bereich des Bandes nicht zugleich auf die angrenzende Mauer geklebt werden, da hierfür das Band stark dehnbar sein müsste. Wird ein elastisch dehnbares Band verwendet, so kann zwar das Band gedehnt werden, um dieses nicht nur um ein Rohr zu wickeln, sondern zugleich auf die angrenzende Mauer aufzukleben. Allerdings gelingt dies nicht zuverlässig und vor allem nicht zuverlässig dauerhaft, weil sich das Band elastisch stark zusammenzieht und Rückstellkräfte das Band von der Mauer lösen können. Diese Probleme treten beim beanspruchten Verfahren nicht auf. Durch die Erfindung wird also in solchen Fällen eine sehr wirksame Feuchteschutzmanschette bereitgestellt.

In einer Ausführungsform der Erfindung wird eine Dichtungsmanschette wie folgt aufgebracht. Es wird ein Streifen verwendet, der um das Rohr herum gelegt und aufgeklebt wird. Zugleich wird der Streifen so weit über den angrenzenden Wandbereich gezogen, dass der Übergang Wand zu Rohr, der rechteckig ist, so abgedichtet wird. Erreicht wird dies wiederum durch die hohe plastische Dehnbarkeit des gesamten Materials, also Folie in Verbindung mit dem aufgebrachten Klebstoff.

In einer Ausgestaltung des Verfahrens werden Isolierungen im Fensterbereich eines Gebäudes vorgenommen. In einen Übergang von einem Fenster zu einem Mauerwerk darf keine Feuchtigkeit eindringen. Ein solcher Übergang muss außerdem luftdicht verschlossen sein. Werden solche Übergänge mit einer erfindungsgemäßen Folie überklebt, so gelingt dies unproblematisch mit nur einer bandförmigen Folie trotzt komplizierter Geometrien, die bei solchen Übergängen auftreten. Die Verwendung von nur einer einstückigen Folie isoliert besonders zuverlässig bei minimalem Materialverbrauch. Beispielsweise Ausnehmungen müssen nicht zusätzlich verklebt werden. Es genügt, die Folie einfach in Ausnehmungen hineinzudrücken und dabei auszunutzen, dass die mit einer Klebstoffschicht versehene Folie stark plastisch gedehnt werden kann.

In einer Ausführungsform der Erfindung ist vor allem auch die Klebstoffschicht plastisch dehnbar. Eine solche Klebstoffschicht ist nicht in Abschnitte im Sinne der Druckschrift DE 10 2004 034 601 A1 unterteilt. Es handelt sich also um eine geschlossene Schicht, die vollständig und durchgehend mit der Folie verbunden ist. Auf diese Weise wird der Halt der Folie auf dem Untergrund weiter verbessert sichergestellt. Die plastische Dehnbarkeit der Klebstoffschicht trägt dazu bei, dass insgesamt Rückstellkräfte vermieden bzw. klein gehalten werden.

In einer Ausführungsform der Erfindung ist die vorgenannte dehnbare Klebstoffschicht wenigstens 0,6 mm, vorzugsweise 1 mm dick und besteht aus Butyl oder Bitumen. Geeignet gewähltes Butyl sowie Bitumen sind dehnbare Materialien, die plastisches Verhalten zeigen. Allerdings reißen diese Materialien auch relativ schnell auseinander, wenn diese gedehnt werden. Überraschend wurde festgestellt, dass dieses frühe Auseinanderreißen nicht auftritt, wenn sich diese auf einer dehnbaren Folie mit einer Schichtdicke von wenigstens 0,6 mm befinden. Eine solche Folie mit der Klebstoffschicht kann um mehr als 100% plastisch gedehnt werden, ohne dass die Klebstoffschicht aufreißt. Eine Schicht von 1 mm kann zuverlässiger geschlossen aufgebracht werden.

In einer Ausführungsform der Erfindung ist die aus Butyl oder Bitumen bestehende Schicht weniger als 2 mm dick. Es ist nämlich zu bevorzugen, unter den zur Auswahl stehenden Butyl- oder Bitumenklebstoffen einen solchen auszuwählen, der besonders formstabil ist und der im Anschluss an eine Dehnung dann seine gedehnte Form auch besonders gut beibehält, sich also plastisch verhält. Denn eine plastisch dehnbare Streckfolie ist nicht vollkommen unelastisch und entwickelt im Anschluss an eine Dehnung Rückstellkräfte. Befindet sich zwischen der Folie und der Klebstoffschicht eine Schaumstoffschicht, so übt auch die Schaumstoffschicht im Anschluss an eine Dehnung Rückstellkräfte aus. Unerwünschte Auswirkungen solcher nicht erwünschten Rückstellkräfte können besonders gut reduziert werden, wenn Bitumen oder Butyl so ausgewählt wurde, dass es sich im Anschluss an eine Dehnung besonders formstabil verhält. Ein formstabiles Butyl- oder Bitumenmaterial kann aber nur dann verwendet werden, wenn die Klebstoffschicht, also die aus Bitumen oder Butyl bestehende Schicht hinreichend dünn ist. Aus diesen Gründen ist eine Obergrenze von 2 mm Schichtdicke zu bevorzugen. Mit einer Schichtdicke von 1 bis 1,5 mm lassen sich am besten die verschiedenen Anforderungen erfüllen, die eine aus Bitumen oder Butyl bestehende Klebstoffschicht erfüllen soll. Als ein besonders formstabiles Klebstoffmaterial im Sinne der vorliegenden Erfindung hat sich u, a. Butyl mit dem Produktnamen Prestik 3321 der Firma Bostik GmbH aus Borgholzhausen, Deutschland, herausgestellt. Mit einer 1 mm dicken Butylschicht Prestik 3321 kombiniert mit einer 25 µm dicken, um wenigstens 600% dehnbaren Stretchfolie wurde erreicht, dass die Folie mit dem aufgebrachten Klebstoff problemlos beispielsweise um 100% gedehnt werden konnte und 90% des gedehnten Zustands dauerhaft erhalten blieb. Wurde die Folie ohne aufgebrachte Klebstoffschicht um 100% gedehnt, so zog sich die Folie nach Entlastung wieder relativ stark zusammen und es verlieb dauerhaft nur noch eine 40%ige Dehnung. Die Länge der Folie betrug also 140% im Vergleich zur ursprünglichen Länge der nicht gedehnten Folie. Maßgeblichen Anteil an der plastischen Dehnbarkeit hatte also die aus Butyl bestehende, 1 mm dicke Klebstoffschicht. Es wurden Versuche mit verschiedenen Butyl- und Bitumenmaterialien durchgeführt. Mit "weicheren", weniger formstabilen, 1 mm dicken Butyl- oder Bitumenschichten verblieb dauerhaft eine Dehnung von 80% im Anschluss an eine 100%ige Dehnung. Mit härteren, formstabileren, 1 mm dicken Butyl- oder Bitumenschichten wurde erreicht, dass im Anschluss an eine 100%ige Dehnung diese nach Entlastung fast vollständig erhalten blieb, insgesamt die Länge also dauerhaft verdoppelt werden konnte. Es wurde ferner ein Langzeitversuche mit dieser 25 µm dicken Folie und einer aufgebrachten 1 mm dicken Klebstoffschicht durchgeführt, indem diese im 100% gedehnten Zustand auf glatte Flächen geklebt wurden. Selbst im Fall der Butylklebstoffschicht, die besonders wenig formstabil war (so dass im Anschluss an eine 100%ige Dehnung nach Entlastung nur 80% dieser Dehnung dauerhaft verblieben), waren die Rückstellkräfte insgesamt so gering, dass sich keine der Folien mit dem Klebstoff löst oder zusammenzog.

Eine geschlossene, geeignet dicke Butyl- oder Bitumenschicht dient nicht nur als formstabilisierendes Klebemittel, sondern dichtet ergänzend gegen Feuchtigkeit und Wind ab. Eine gewünschte Dichtigkeit wird dann also nicht nur durch die Folie, sondern ergänzend auch durch die Butyl- oder Bitumenschicht sichergestellt. Eine geschlossene Butyl- oder Bitumenschicht dämmt außerdem Körperschall und wirkt wärmeisolierend. Durch Vorsehen einer auf die Folie aufgebrachten Butyl- oder Bitumenschicht gelingt es also verbessert abzudichten. Außerdem wird wärmeisoliert und Schall gedämmt.

Die Dämmung von Körperschall gelingt besonders gut, wenn die Bitumen- oder Butylschicht unmittelbar auf dem Körper, durch den bzw. in dem Körperschall entsteht, aufgeklebt ist. Vom Körper ausgehender Schall kann aufgrund der festen Verbindung besonders gut in die Bitumen- oder Butylschicht eindringen und wird hier in Wärme umgesetzt werden. Daher wird in einer Ausgestaltung des Verfahrens die Folie mit der Bitumen- oder Butylklebeschicht unmittelbar auf Körper aufgeklebt, die gedämmt werden sollen. Es handelt sich dabei insbesondere um Körper, durch die Wasser hindurchfließt, also Wasserrohre oder aber zum Beispiel Spülkästen von Toiletten. Insbesondere Abzweigungen oder eckigen Geometrien können mit nur einer Folie aufgrund der großen Dehnbarkeit des Materials vollflächig abgedeckt werden. Verbleibende Lücken werden so minimiert und damit ein besonders gutes gewünschtes Resultat erzielt.

In einer Ausgestaltung der Erfindung ist auf die Folie zunächst ein Schaumstoffmaterial aufgebracht, so zum Beispiel aufgeklebt. Auf dem Schaumstoffmaterial befindet sich dann ein dauerhaft klebebereiter Klebstoff, so zum Beispiel eine Butyl- oder Bitumenschicht. Es steht dann ein Verbund umfassend eine Folie zur Verfügung, die zur Schall- und/oder Wärmedämmung eingesetzt werden kann. Denn Schaumstoff absorbiert Schall und schützt vor Verlust von Wärme. Ein solcher Verbund wird also insbesondere dann verwendet, wenn Schall gedämmt oder gegen Verlust von Wärme isoliert werden soll. Ein Beispiel stellt die nachträgliche Wärmedämmung und Schalldämmung von Rohren dar. Aber auch flächige Bereiche, die Körperschallquellen darstellen, können mit dem Verbund überklebt werden. Vorteilhaft ist es mit dem Verbund möglich, Körper, die gegen Schall oder gegen Wärme isoliert werden müssen, mit nur einer Folie überdecken zu können, da bei Bedarf die Folie mit der Schaumstoffschicht und dem Klebstoff auseinandergezogen werden kann. Die Schaumstoffschicht ist so auszuwählen, dass sie ebenfalls im gewünschten Umfang gedehnt werden kann.

Vorzugsweise wird PVC, aus Kostengründen aber besonders bevorzugt ein PE oder ein PU-Kunststoff als Material für die Schaumstoffschicht eingesetzt. PVC, PU oder PE dämmen sowohl in Bezug auf Schall als auch hinsichtlich Wärme besonders gut. Da der Verbund als Flächenware bereitgestellt werden kann, nimmt dieser bei Transport und Lagerung erheblich weniger Volumen ein im Vergleich zu Schaumstoffrohren.

Ein typisches Problem besteht bei Rohren bei T-Stücken. Mit konventionellen Folien kann zwar bis zum T-Stück isoliert werden. Im Anschluss daran ist es jedoch erforderlich, durch Abschneiden von kleineren Stücken den T-Stück-Bereich besonders zu isolieren. Mit der vorliegenden Erfindung gelingt die Dämmung und Isolierung eines Übergangs sehr viel einfacher, da einfach die Folie entsprechende auseinandergezogen wird und der T-Stück-Bereich so vollständig erfasst werden kann. Es verbleiben praktisch keine Rohrbereiche, auf denen der Verbund nicht aufgeklebt werden kann. Ein vollflächiges Aufkleben stellt dauerhaft die gewünschte Dämmung bzw. Isolierung sicher.

Durch eine als Klebemittel eingesetzte Bitumen- oder Butylschicht wird erreicht, dass Schall, welcher beispielsweise von einem Rohr nach außen gelangt, zunächst in die Bitumen- bzw. Butylschicht eintritt und in dieser in Wärme umgewandelt wird. Dadurch wird auch in besonderem Umfang eine besonders gute Schalldämmung erzielt, die vielen herkömmlichen Dämmungen überlegen ist.

Die Verwendung des Bitumen oder Butyls hat insbesondere im Fall einer glatten Oberfläche, so zum Beispiel einer metallischen Oberfläche von Rohren den weiteren Vorteil, dass dieses Klebematerial auch vollständig wieder entfernt werden kann. Dies ist von besonderem Interesse, wenn nachträglich beispielsweise eine Rohrabzweigung vorgenommen werden soll. Hier ist es wichtig, dass die Klebstoffreste rückstandsfrei entfernt werden können, um einen Anschluss sauber löten oder quetschen zu können. Dies wird durch das Bitumen- oder Butylmaterial gewährleistet. Andere Klebstoff-Materialien, wie zum Beispiel das häufig verwendete Klebemittel Hotmelt®, vermögen dies nicht zu leisten.

In einer Ausführungsform der Erfindung befindet sich zwischen Folie und Klebstoffschicht eine netzartige Struktur, die beispielsweise aus einem Kunststoffmaterial besteht. Die netzartige Struktur besteht beispielsweise aus Polyethylen. Die Maschen des Kunststoffmaterials können ca. 1,0 bis 2,0 cm groß sein. Wird ein solches Kunststoffmaterial mit einer Dicke von beispielsweise ca. 1,0 bis 2,0 mm dazwischen platziert, so ergibt sich auf der Folie eine wellige Oberfläche. Durch die wellige Oberflächenstruktur besteht verbessert die Möglichkeit, auf die Folie haltbar einen Putz aufbringen zu können. Da die netzartige Struktur sich zwischen der Folie und der Klebstoff- bzw. Klebemittelschicht befindet, ist diese zuverlässig im Verbund eingebettet. Die Herstellung ist preiswert, da die Netzstruktur mit der Aufbringung der Klebstoffschicht innerhalb des Verbundes befestigt wird.

Das netzartige Material aus Kunststoff verfügt über die Eigenschaft, ebenfalls auseinandergezogen werden zu können. In diesem Fall verändert sich die Geometrie der einzelnen Waben. Es behindert also eine Dehnung des Verbundes nicht oder kaum.

Bei großen Flächen mit wenigstens 1 m Länge und Breite sind größere Maschen als die genannten 1,0 cm bis 2,0 cm zweckmäßig. Maschengrößen von 4,0 bis 5,0 cm sind dann besonders zu bevorzugen. Eine solche Oberfläche bietet genügend Halt für eine Schicht Putz.

Die erfindungsgemäße, mit Bitumen oder Butyl versehene Folie ist auch gut geeignet, um Dehnungsfugen zu überkleben, da sowohl das Klebstoffmaterial als auch die Folie entsprechend dehnbar ist. Es ist den üblichen Belastungen problemlos gewachsen. Von Vorteil ist ferner, dass der Butylkleber hinreichend fest mit beispielsweise einer Betonwand verbunden werden kann. Ist ein Teil der Folie bereits aufgeklebt, so genügt es, den noch nicht aufgeklebten Teil in die passende Lage zu ziehen, um so gewünschte Stellen zu erreichen, insbesondere wenn die zu isolierende Fläche von einer planparallelen Fläche abweichen. Es wird eine luft- und feuchtigkeitsdichte Fläche geschaffen. Es kann zusätzlich eine Schalldämmung und/ oder Wärmeisolierung erreicht werden.

In einer Ausführungsform der Erfindung wird die plastisch dehnbare Folie mit der Klebstoffschicht benutzt, um Dachunterspannbahnen oder Dampfbremsbahnen miteinander luftdicht sowie feuchtigkeitsdicht zu verbinden. Eine Unterspannbahn befindet sich unterhalb der Latten eines Dachstuhls. Das Verbinden gelingt wiederum besonders einfach, da bei Bedarf die Folie mit dem Klebstoff auseinander gezogen werden kann. Wird Bitumen oder Butyl als Klebstoff eingesetzt, so ist der Verbund umfassend die Folie und die Butyl- oder Bitumenschicht einem Temperaturbereich von - 30 Grad bis 90 Grad Celsius in der Regel dauerhaft gewachsen. Bei der Auswahl einer Streckfolie wird zweckmäßig ferner auf UV-Beständigkeit von wenigstens 12 Monaten geachtet, um eine auch in dieser Hinsicht langlebige Folie bereitzustellen.

In einer Ausführungsform der Erfindung verfügt eine Seite der Folie über starke, adhäsive Haftungskräfte im Vergleich zur anderen Seite der Folie. Kommt es darauf an, dass sich die Oberfläche der Folie adhäsiv verhält, so zum Beispiel weil Überlappungsbereiche besonders gut verbunden sein sollen, so wird der Klebstoff auf die nicht oder kaum haftende Seite aufgebracht. Ist dagegen eine adhäsiv haftende Oberfläche der Folie unerwünscht, so wird der Klebstoff auf die adhäsiv haftende Oberfläche aufgetragen. Verfügt nur eine Seite der Oberfläche über relativ starke adhäsive Eigenschaften, so kann wahlweise ein anspruchsgemäßer Verbund mit oder ohne adhäsiver Oberfläche produziert werden. Ohne großen Lagerungs- und Vorratsaufwand betreiben zu müssen, kann so kurzfristig auf Kundenwünsche bei der Produktion reagiert werden.

Zur Ausführung der Erfindung wurden kommerziell erhältliche, 3-lagig coextrudierte, geblasene, extra feste Stretchfolien mit einer UV-Beständigkeit von einem Jahr - einseitig klebend - verwendet. Die Folien wurden aus Low Density Densitypolyethylen (LDPE) und Linear Low Densitypolyethylen (LLDPE) hergestellt.

Die verwendeten Folien wiesen eine Dichte von 0,923; 0,930 bzw. 0,957 g/cm³ in Abhängigkeit von verwendeten Additiven auf.Die Folien wiesen ferner folgende mechanische Kennwerte auf, die sich auf eine 25 Mikrometer starke Folienbahn beziehen.

### Zugfestigkeit nach DIN 53455

| | |
|---|---|
| Längsrichtung: | > 40 N/mm² |
| Querrichtung: | > 40 N/mm² |

### Dehnverhalten nach DIN 53455

| | |
|---|---|
| Längsrichtung: | > 600 % |
| Querrichtung: | > 700 % |

### Durchstoß nach UFP-Norm

| | |
|---|---|
| Wert: | > 4 N |

### Wasserdampfdurchlässigkeit laut DIN 53122

Wert: 1,074 g/m² d

Wurde eine solche Folie um 100% gedehnt, so zog sich eine solche Folie nach Entlastung wieder relativ stark zusammen. Es verblieb dauerhaft lediglich eine 40% Dehnung. Die Länge der Folie betrug dann also dauerhaft 140% im Vergleich zum ursprünglichen, nicht gedehnten Zustand.

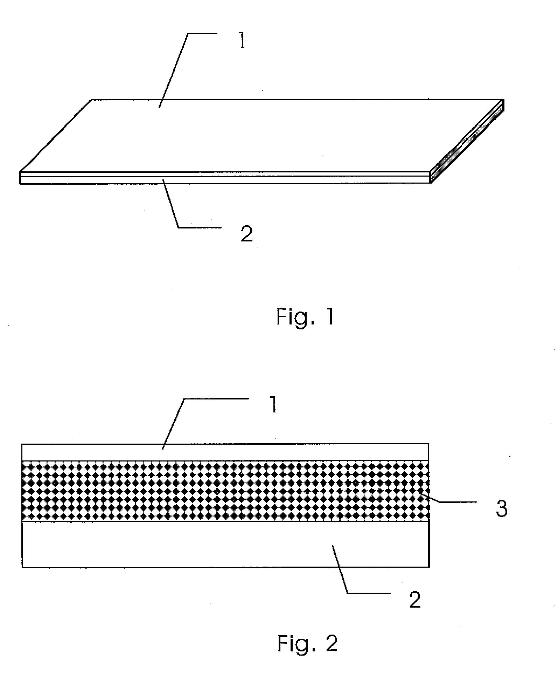

Figur 1 soll eine solche Folie 1 darstellen, die wenigstens um 600% gestreckt werden kann, ohne zu zerreißen. Die Folie ist 25 µm dick. Sie ist gemäß südeuropäischer Norm 12 Monate UV-beständig. Außerdem ist sie besonders reißfest auch gegenüber Kanten. Eine Seite dieser Folie ist außerdem so behandelt worden, dass sich diese adhäsiv verhält, also ohne Vorhandensein einer separaten Klebstoffschicht haftet. Die andere Seite verhält sich im Vergleich dazu nicht adhäsiv. Unterhalb der Folie befindet sich eine Schicht, die 1 mm dick ist und vollständig aus Butyl besteht. Verwendet wurde unter anderem Butyl mit der Produktbezeichnung "Prestik 3321" der Firma Bostik GmbH aus Borgholzhausen, Deutschland. Die gesamte Unterseite der Folie 1 ist durch die Butylschicht abgedeckt. Die Folie sowie die Butylschicht kann in Form eines Bandes oder aber auch beispielsweise als Quadrat vorliegen.

Zwischen der Folie 1 und der Butylschicht 2 kann eine netzartige Struktur oder eine Schaumstoffschicht vorhanden sein. Ist eine netzartige Struktur vorhanden, so ist diese so dazwischen gebracht, dass die Struktur durch Erhebungen der Folie sichtbar ist. Putz kann dann verbessert auf der Folie halten.

Eine Schaumstoffschicht ist beispielsweise zweckmäßig 3 mm dick, um auf der einen Seite gut zu dämmen und auf der anderen Seite erwünschtes plastisches Dehnungsverhalten des Verbundes nicht zu beeinträchtigen.

Um die Wirksamkeit einer Wärmeisolierung zu testen, wurde ein typisches in einem Gebäude verwendetes Kupferrohr mit 52 °C heißen Wasser durchspült. Zunächst wurde die Temperatur des Rohres im nicht isolierten Zustand gemessen und eine konstante Rohraußentemperatur von 49 °C auf einer Länge von 1 m ermittelt. Im Anschluss daran wurde das Rohr mit einer Folie isoliert, unterhalb der eine ca. 3 mm dicke, aus PVC bestehende Schaumstoffschicht aufgebracht war und unterhalb der Schaumstoffschicht eine 1 mm dicke Schicht aus Butyl. Die Isolierung wies außen nur noch eine Temperatur von 27 bis 29 °C auf. Diese erzielten Werte sind vergleichbar mit den Isoliermaterialien, die üblicherweise für die Wärmeisolierung von Rohren eingesetzt werden.

In Figur 2 wird eine für eine Wärmeisolierung verwendete Folie 1 mit einer Butylschicht 2 im Schnitt gezeigt, zwischen denen sich eine 3 mm dicke Schaumstoffschicht 3 befindet. Die Schaumstoffschicht wurde unmittelbar auf die Folie geklebt. Auf die andere Seite der Schaumstoffschicht wurde der Butylklebstoff 2 mit einer Dicke von 1 mm aufgetragen. Die Schaumstoffschicht ist an der einen Seite dann vollflächig mit der Folie verbunden und auf der anderen Seite vollflächig mit der Butylschicht.

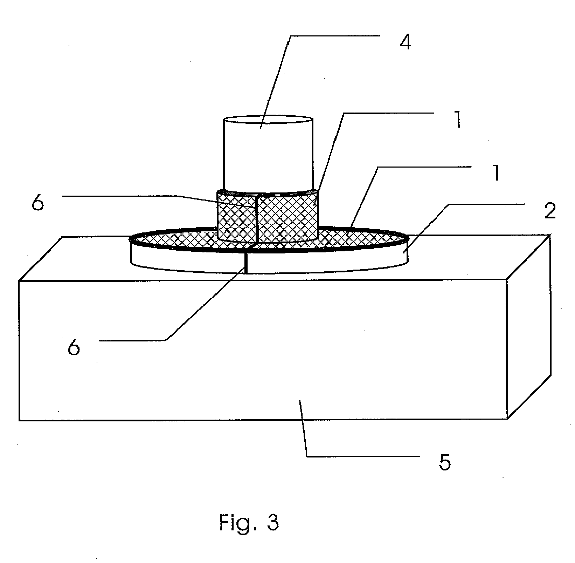

Figur 3 zeigt die Nutzung einer bandförmigen Folie 1 , die um ein Rohr 4 gewickelt ist. Ein Teil des Bandes klebt auf einer angrenzenden Mauer 5. Um dies zu ermöglichen, wurde das Band, soweit dieses an die Mauer angrenzt, stark gedehnt. Die Linie 6 deutet Anfang und Ende der bandförmigen Folie an. In der Praxis werden Anfang und Ende überlappen, um so eine dichte Verbindung auch in diesem Bereich sicherzustellen. Der kritische Übergangsbereich zwischen Rohr und Wand wird so fast vollständig durch eine einstückige Folie überdeckt. Es verbleibt lediglich ein überlappender Bereich zwischen Anfang und Ende des Bandes. Ist dieser Überlappungsbereich hinreichend groß gewählt, so stellt dieser auch keine besondere Schwachstelle in Bezug auf Dichtigkeit dar. Da es nur einen solchen Überlappungsbereich gibt, wird der Materialverbrauch minimiert.

Um eine mit einem Klebstoff versehene Folie handhaben zu können, wird der Klebstoff mit einer leicht lösbaren, insbesondere aus Silikon bestehenden Folie abgedeckt, die in der Regel nicht dehnbar ist. Vor dem Aufkleben wird diese nicht dehnbare Folie abgezogen und die mit einem Klebstoff versehene Folie kann verwendet werden.

## Patentansprüche

1. Verfahren für das Isolieren, Dämmen oder Abdichten von Gebäudeteilen oder Gebäudeeinrichtungen, indem eine mit einer Klebstoffschicht (2) versehene Folie (1), die um wenigstes 100%, vorzugsweise um wenigstens 200% plastisch gedehnt werden kann, auf das oder die zu isolierenden, abzudichtenden oder zu dämmenden Teile oder Einrichtungen geklebt wird und die Folie mit dem Klebstoff dabei gedehnt wird.

2. Verfahren nach Anspruch 1 , bei dem ein Übergang zwischen einer Wand und einem aus der Wand heraustretenden Rohr durch die mit einer Klebschicht versehenen Folie abgedichtet wird.

3. Verfahren nach Anspruch 1 , bei dem eine T-förmige Abzweigung eines Wasserleitungsrohres mit nur einer mit einer Klebstoffschicht (2) versehenen Folie (1) vollständig überklebt wird.

4. Verfahren nach einem der vorhergehenden Ansprüche, bei dem eine mit einer Klebstoffschicht (2) versehene Folie (1) verwendet wird, die eine Schaumstoffschicht (3) umfasst, die zwischen der Folie (1) und der Klebstoffschicht (2) angeordnet ist.

5. Verfahren nach einem der vorhergehenden Ansprüche, bei dem eine mit einer Klebstoffschicht (2) versehene Folie (1) verwendet wird, die eine netzförmige Struktur umfasst, die zwischen der Folie (1) und der Klebstoffschicht (2) angeordnet ist, wobei die netzförmige Struktur durch Erhebungen der Folie (1) von außen sichtbar sind.

6. Verfahren nach einem der vorhergehenden Ansprüche, bei dem die Klebstoffschicht (2) auf Bitumen oder Butyl besteht.

7. Verfahren nach einem der vorhergehenden Ansprüche, bei dem die Klebstoffschicht (2) wenigstens 0,6 mm, vorzugsweise wenigstens 1 mm dick ist.

8. Verfahren nach einem der vorhergehenden Ansprüche, bei dem die Klebstoffschicht (2) maximal 2 mm, vorzugsweise maximal 1 ,5 mm dick ist.

9. Verfahren nach einem der vorhergehenden Ansprüche, bei dem die Folie mit dem aufgebrachten Klebstoff im Anschluss an eine Dehnung um 100% wenigstens 80% dieser Dehnung, vorzugsweise wenigstens 90% dauerhaft beibehält.

10. Verbund aus Folie (1) und Klebstoffschicht (2) zur Durchführung eines Verfahrens nach einem der vorhergehenden Ansprüche, **dadurch gekennzeichnet, dass** die Folie mit der Klebstoffschicht wenigstens um 100% plastisch gedehnt werden kann.

11. Verbund nach dem vorhergehenden Anspruch, bei dem die Klebstoffschicht aus Bitumen oder Butyl besteht.

12. Verbund nach einem der beiden vorhergehenden Ansprüche, bei dem die Klebstoffschicht wenigstens 0,6 mm, vorzugsweise wenigstens 1 mm dick ist.

13. Verbund nach einem der drei vorhergehenden Ansprüche, bei dem eine Wärme isolierende oder eine Schall dämmende Schicht, insbesondere eine Schaumstoffschicht sich zwischen der Folie und der Klebstoffschicht befindet.

14. Verbund nach einem der vier vorhergehenden Ansprüche, wobei eine Seite der Folie (1) im Vergleich zur anderen Seite der Folie adhäsiv haftet.

15. Verbund nach einem der vier vorhergehenden Ansprüche, wobei der Verbund im Anschluss an eine 100%ige Dehnung wenigstens 80%, vorzugsweise wenigstens 90% dieser Dehnung dauerhaft aufrecht erhält.
